# EUROPÄISCHE PATENTSCHRIFT

(11) **EP 3 309 523 B1**
(45) Veröffentlichungstag und Bekanntmachung des Hinweises auf die Patenterteilung: **11.03.2020**
(21) Anmeldenummer: 16194083.8
(22) Anmeldetag: 17.10.2016
(51) Int. Cl.: G01F 23/284, G01S 13/88, G01S 13/89, H01Q 1/22, H01Q 21/20

(54) **FÜLLSTANDMESSGERÄT ZUM BESTIMMEN EINER TOPOLOGIE EINER FÜLLGUTOBERFLÄCHE**
LEVEL METER FOR DETERMINING A TOPOLOGY OF A PRODUCT SURFACE
JAUGE DESTINÉE À DÉTERMINER UNE TOPOLOGIE D'UNE SURFACE DE MATÉRIAU DE REMPLISSAGE

(43) Veröffentlichungstag der Anmeldung: 18.04.2018
(73) Patentinhaber: VEGA Grieshaber KG, 77709 Wolfach (DE)
(72) Erfinder: WELLE, Roland, 77756 Hausach (DE); WÄLDE, Steffen, 78078 Niedereschach (DE)
(74) Vertreter: Maiwald Patent- und Rechtsanwaltsgesellschaft mbH

(56) Entgegenhaltungen:
- WO-A1-2015/120883
- DE-U1-202010 018 354
- US-A1- 2006 111 056

## Beschreibung

### Gebiet der Erfindung

Die Erfindung betrifft allgemein die Füllstandmessung. Insbesondere betrifft die Erfindung ein Füllstandmessgerät zum Bestimmen einer Topologie einer Füllgutoberfläche, ein Verfahren zum Bestimmen einer Topologie einer Füllgutoberfläche, ein Programmelement für ein Füllstandmessgerät sowie ein computerlesbares Medium mit einem solchen Programmelement.

### Hintergrund der Erfindung

Die Erfassung einer Topologie einer Füllgutoberfläche kann insbesondere bei der Messung von Schüttgütern und den dabei oftmals auftretenden Schüttkegeln und Abzugstrichtern innerhalb oder außerhalb geschlossener Behälter vorteilhaft anwendbar sein. Auch bei bewegten Flüssigkeiten kann das Erfassen einer Oberflächentopologie zur Bestimmung von Füllständen und/oder Volumina anwendbar sein. Derartige bewegte Flüssigkeiten treten beispielsweise beim Einsatz von Rührvorrichtungen und den daraus erzeugten Strömungsbildern an der Flüssigkeitsoberfläche (sogenannte Tromben) auf. Eine Bestimmung der Oberflächentopologie kann Rückschlüsse auf weitere Größen, wie beispielsweise eine Viskosität oder eine Durchmischung eines Füllgutes, gegebenenfalls unter Berücksichtigung einer Geschwindigkeit der Rührvorrichtung, erlauben.

Verfahren zum berührungslosen Abtasten einer Oberfläche können beispielsweise auf dem Prinzip beruhen, dass ein in Richtung einer Oberfläche ausgesendetes Signal an dieser reflektiert wird und eine Laufzeit und/oder Signalstärke des reflektierten Signals ausgewertet wird. Um eine Topologie einer Füllgutoberfläche mit ausreichender Genauigkeit zu erfassen, kann es notwendig sein, eine Vielzahl von Messungen in Richtung bestimmter Bereiche einer Füllgutoberfläche auszuführen, was eine Komplexität sowie Kosten für derartige Messvorrichtungen oder Messverfahren erhöhen kann.

In dem Dokument DE 20 2010 018 354 U1 ist eine Vorrichtung zur Berechnung einer Oberfläche eines Füllguts eines Behälters beschrieben. Die Vorrichtung weist eine Antenneneinrichtung mit mehreren nebeneinander angeordneten Antennen zum Senden und Empfangen von elektromagnetischen Signalen auf, welche an wenigstens zwei verschiedenen Teilbereichen der Füllgutoberfläche reflektiert werden. Weitere weist die Vorrichtung eine Recheneinrichtung zur Berechnung einer Oberfläche des Füllguts auf basierend den gesendeten und empfangenen elektromagnetischen Signalen auf.

WO 2015/120883 A1 betrifft ein Füllstandmessgerät und ein Verfahren zur Topologiebestimmung einer Füllgutoberfläche.

US 2006/111056 A1 betrifft eine Vorrichtung mit mehreren Antennenelementen, wobei die Antennenelemente für eine Satellitenkommunikation ausgestaltet sind.

### Zusammenfassung der Erfindung

Eine Aufgabe der Erfindung kann darin gesehen werden, ein kompaktes, robustes, zuverlässiges, wartungsarmes, verschleißarmes sowie kostengünstiges Füllstandmessgerät zur Bestimmung einer Topologie einer Füllgutoberfläche bereitzustellen.

Diese Aufgabe wird durch den Gegenstand der unabhängigen Ansprüche gelöst. Weitere Ausführungsformen der Erfindung ergeben sich aus den abhängigen Ansprüchen und der nachfolgenden Beschreibung.

Ein Aspekt der Erfindung betrifft ein Füllstandmessgerät zum Bestimmen, Ermitteln und/oder Messen einer Topologie einer Füllgutoberfläche. Die Füllgutoberfläche kann beispielsweise die Oberfläche eines Schüttguts und/oder eines flüssigen Füllgutes, etwa in einem Behälter oder auf einer offenen Schüttguthalde, bezeichnen. Das Füllstandmessgerät weist eine Antennenanordnung mit wenigstens drei Antenneneinrichtungen auf, welche jeweils zum Senden eines Radarsignals und zum Empfangen eines an der Füllgutoberfläche reflektierten Signals eingerichtet sind.

Weiter weist das Füllstandmessgerät eine Steuereinheit zum Steuern der Antennenanordnung und/oder der Antenneneinrichtungen der Antennenanordnung auf. Die Steuereinheit kann auch einen elektrischen Steuerkreis (control circuit), einen Regelkreis, einen Auswertekreis, und/oder eine Auswerteeinheit zum Auswerten und/oder Verarbeiten von Messsignalen der Antennenanordnung bezeichnen. Die Antennenanordnung weist wenigstens drei Antennenflächen auf, deren Flächennormalenvektoren und/oder Flächennormalen quer zueinander angeordnet sind, wobei auf jeder Antennenfläche eine Antenneneinrichtung angeordnet ist, so dass mit jeder Antenneneinrichtung ein unterschiedlicher Raumwinkelbereich erfassbar ist und/oder erfasst werden kann. Die Antenneneinrichtungen sind jeweils dazu eingerichtet, basierend auf dem von der Füllgutoberfläche reflektierten Signal ein Messsignal zu erzeugen, welches mit dem reflektierten Signal korreliert. Beispielsweise kann jede der Antenneneinrichtungen einen Abstand zur Füllgutoberfläche und/oder einem Teilgebiet der Füllgutoberfläche ermitteln, wobei der Abstand ein Maß für die Füllhöhe des Füllgutes in dem erfassten Winkelbereich ist. Die Steuereinheit ist dazu eingerichtet, die Messsignale der Antenneneinrichtungen weiterzuverarbeiten und/oder zu einem gemeinsamen Messsignal zu kombinieren. Insbesondere kann die Steuereinheit dazu eingerichtet sein, durch Kombination wenigstens eines Teils der Messsignale der Antenneneinrichtungen die Topologie der Füllgutoberfläche zu ermitteln.

Die Antennenanordnung kann im Kontext dieser Anmeldung eine Radarantenne bezeichnen. Die Antenneneinrichtungen können im Kontext dieser Anmeldung als unabhängig arbeitende Antenneneinheiten, beispielsweise Teilradarantennen und/oder Teilradargruppen, verstanden werden, welche jeweils derart an den Antennenflächen der Antennenanordnung angeordnet sind, dass mit jeder Antenneneinrichtung ein Teilgebiet der Füllgutoberfläche erfasst werden kann. Die von den Antenneneinrichtungen erfassten Teilgebiete können dabei zumindest teilweise überlappen. Damit jede der Antenneneinrichtung ein Teilgebiet der Füllgutoberfläche erfassen kann, sind die Antenneneinrichtungen auf den schräg und/oder quer zueinander angeordneten Antennenflächen angeordnet. Die Antennenflächen können beispielsweise jeweils eine Teilmantelfläche der Antennenanordnung bezeichnen. Die Flächennormalenvektoren der Antennenflächen können dabei transversal, orthogonal und/oder nicht parallel zueinander angeordnet sein, ausgerichtet sein und/oder verlaufen. Auch können die Flächennormalenvektoren windschief zueinander verlaufen. Mit anderen Worten können die Antennenflächen und die darauf angeordneten Antenneneinrichtungen relativ zueinander und/oder gegeneinander geneigt sein. Durch diese Anordnung der Antennenflächen sowie der darauf angeordneten Antenneneinrichtungen kann in vorteilhafter Weise sichergestellt sein, dass jede der Antenneneinrichtungen einen unterschiedlichen bzw. einen anderen Raumwinkelbereich und somit ein unterschiedliches Teilgebiet der Füllgutoberfläche erfassen kann. Damit lässt sich in vorteilhafter Weise ein kompaktes, robustes, zuverlässiges, wartungsarmes, verschleißarmes und kostengünstiges Füllstandmessgerät bereitstellen, mit welchem ein Halbraum unterhalb des Füllstandmessgerätes, d.h. ein Gesamtraumwinkel von etwa π und/oder 180° erfasst werden kann, ohne dass Komponenten des Füllstandmessgerätes bewegt, beispielsweise rotiert und/oder verschwenkt, werden müssen.

Erfindungsgemäß sind die mit den Antenneneinrichtungen erfassbaren Raumwinkelbereiche jeweils durch analoge und/oder digitale Strahlformung variierbar und/oder veränderbar. Mit anderen Worten können die mit den Antenneneinrichtungen erfassten Winkelbereiche durch elektronische Strahlablenkung bzw. Verfahren zur digitalen und/oder analogen Strahlformung verändert werden, d.h. mit jeder Antenneneinrichtung kann eine analoge und/oder digitale Strahlformung durchgeführt werden. Mittels analoger und/oder digitaler Strahlformung können die Hauptstrahlrichtungen und/oder die Hauptempfangsrichtungen einer jeden Antenneneinrichtung relativ zu den zugehörigen Flächennormalenvektoren der Antennenflächen verändert werden, so dass Reflexionsverhältnisse in verschiedenen Winkelrichtungen und somit verschiedene Winkelbereiche erfasst werden können. Insgesamt kann so ein von dem Füllstandmessgerät erfassbarer Raumwinkelbereich in vorteilhafter Weise erhöht werden. Zusammenfassend kann durch die erfindungsgemäße Antennenanordnung und der Steuereinrichtung ein Füllstandmessgerät bereitgestellt werden, welches basierend auf den von den Antenneneinrichtungen empfangen Signalen sowie durch Verwendung eines Verfahrens zur digitalen und/oder analogen Strahlformung eine genaue Vermessung eines unterhalb des Füllstandmessgeräts befindlichen Halbraumes ermöglicht.

Die Erfindung kann insbesondere als auf den nachfolgend beschriebenen Gedanken und Erkenntnissen beruhend angesehen werden. Herkömmliche antennenbasierte Füllstandmessgeräte und/oder Auswerteverfahren zur Bestimmung der Topologie einer Schüttgutoberfläche ohne mechanisches Verstellen einer Hauptstrahlrichtung der Antenne können es erlauben, die Reflexionsverhältnisse in verschiedenen Winkelrichtungen durch analoge und/oder digitale Strahlformung zu erfassen. Die Topologie einer Schüttgutoberfläche unterhalb der Antenne kann jedoch nur in einem eingeschränkten Winkelbereich von rund 60° relativ zu einer Montagerichtung der Antenne zuverlässig und mit ausreichender Präzision ermittelt werden. Durch die vorliegende Erfindung und die erfindungsgemäße Antennenanordnung mit wenigstens drei gegeneinander geneigten Antenneneinrichtungen wird in vorteilhafter Weise eine Messung der Topologie der Oberfläche eines Schüttgutes bis zu einem Winkel von +- 90° möglich. Damit werden Messungen auch in Behältern ermöglicht, welche nahezu vollständig mit Füllgut befüllt sind. Zudem können die Antennenflächen und/oder die Antenneneinrichtungen im Wesentlichen flach und/oder planar ausgebildet werden, wodurch eine kostengünstige Realisierung des Füllstandmessgeräts erreicht wird.

Gemäß einer Ausführungsform der Erfindung liegt ein Ablenkwinkel zwischen einer Hauptstrahlrichtung jeder Antenneneinrichtung und dem zugehörigen Flächennormalenvektor der Antennenfläche in einem Bereich von +/- 45°. Der Ablenkwinkel kann dabei zwischen der Hauptstrahlrichtung einer Antenneneinrichtung und dem Flächennormalenvektor derjenigen Antennenfläche bemessen sein, auf welcher diese Antenneneinrichtung angeordnet ist. Durch den voranstehend bezeichneten Bereich des Ablenkwinkels, welcher einen maximal erfassbaren Winkelbereich einer Antenneneinrichtung bezeichnen kann, kann sichergestellt sein, dass die Topologie des Füllgutes mit hoher Präzision in einem Halbraum unterhalb des Füllstandmessgerätes vollständig ermittelt, bestimmt und/oder vermessen werden kann.

Gemäß einer Ausführungsform der Erfindung weisen die Antenneneinrichtungen jeweils wenigstens ein Sendeelement zum Senden des Radarsignals und wenigstens zwei Empfangselemente zum Empfangen des reflektierten Signals auf. Alternativ weisen die Antenneneinrichtungen jeweils wenigstens zwei Sendeelemente zum Senden des Radarsignals und wenigstens ein Empfangselement zum Empfangen des reflektierten Signals auf. Die Sendeelemente und die Empfangselemente können dabei allgemein Antennenelemente des Füllstandmessgerätes bezeichnen. Beispielsweise können die Antennenelemente als Hohlleiterelemente, als Patchelemente, als Hornantennenelemente, als dielektrische Antennenelemente und/oder als Stabelemente ausgebildet sein. Die Antennenelemente können dabei zum Senden und Empfangen ausgebildet sein, d.h. die Sendeelemente und die Empfangselemente können baugleich ausgebildet sein. Auch können die Sendeelemente und die Empfangselemente unterschiedlich ausgestaltete sein.

Allgemein kann durch die Montage zumindest eines Sendeelementes und zumindest zweier Empfangselemente oder durch die Montage zumindest zweier Sendeelemente und zumindest eines Empfangselementes auf jeder der Antennenflächen, insbesondere einer auf dem Kopf stehenden Antennenanordnung, z.B. in Form einer auf dem Kopf stehenden Pyramide und/oder eines auf dem Kopf stehenden Pyramidenstumpfs, in Verbindung mit Verfahren der analogen und/oder digitalen Strahlformung eine kompaktes, robustes, zuverlässiges, kostengünstiges und präzises Füllstandmessgerät zur Erfassung der Topologie bereitgestellt sein.

Gemäß einer Ausführungsform der Erfindung sind die Sendelemente und die Empfangselemente der Antenneneinrichtungen flächig auf den zugehörigen Antennenflächen angeordnet. Beispielsweise können die Sendeelemente und die Empfangselemente als Array in einer oder mehreren Zeilen und/oder Spalten auf den Antennenflächen angeordnet sein. Alternativ oder ergänzend sind direkt benachbarte Sendeelemente und/oder Empfangselemente einer jeden Antenneneinrichtung in einem Abstand kleiner oder gleich der halben Wellenlänge des Radarsignals voneinander beabstandet. Mit anderen Worten können direkt benachbart zueinander auf einer Antenneneinrichtung angeordnete Sendeelemente und/oder Empfangselemente einen Abstand zueinander aufweisen, welcher kleiner oder gleich der halben Wellenlänge des Radarsignals ist. Die Mittenfrequenz des Radarsignals kann beispielsweise 79 GHz betragen, was einer Wellenlänge von ca. 3,8 mm entspricht, so dass der maximale Abstand zwischen zwei direkt benachbarten Sendeelementen und/oder Empfangselementen rund 1,9 mm betragen kann. Durch eine derartige Beabstandung können in vorteilhafter Weise Neben-Gitterkeulen vermieden werden und eine bessere Fokussierung der Antenneneinrichtungen kann erreicht werden.

Gemäß einer Ausführungsform der Erfindung sind die Sendelemente und die Empfangselemente der Antenneneinrichtungen T-förmig auf den zugehörigen Antennenflächen angeordnet. Mit anderen Worten können die Sendelemente und/oder die Empfangselemente in einer T-förmigen Geometrie auf wenigstens einer der Antennenflächen, insbesondere auf jeder der Antennenflächen, verteilt und/oder angeordnet sein. Beispielsweise kann der horizontale Schenkel der T-Form lediglich Sendelemente und der vertikale Schenkel lediglich Empfangselemente aufweisen oder umgekehrt. Allgemein können auf einer oder mehreren Antennenflächen die Sendelemente in einer ersten Reihe und die Empfangselemente in einer zweiten Reihe angeordnet sein. Benachbarte Sendeelemente können auch versetzt zueinander relativ zu einer Mitte, einem Zentrum und/oder einer Mittellinie der ersten Reihe angeordnet sein. Ebenso können benachbarte Empfangselemente versetzt zueinander relativ zu einer Mitte, einem Zentrum und/oder einer Mittellinie der ersten Reihe angeordnet sein. Die erste Reihe kann sich dabei quer zur zweiten Reihe erstrecken und/oder quer zur zweiten Reihen verlaufen und/oder quer zur zweiten Reihe angeordnet sein. Insbesondere kann die erste Reihe im Wesentlich orthogonal zur zweiten Reihe verlaufen und so die T-Form bilden. Durch ein geeignetes Multiplexing, insbesondere ein Zeitmultiplexing, der Sendeelemente und/oder der Empfangselemente sowie durch geeignete Auswertung der mit jedem Empfangselement empfangenen reflektierten Signale kann auf diese Weise eine Kollektion von Echokurven identifiziert werden, welche einer rechteckigen Anordnung eines virtuellen Arrays entsprechen. Ferner kann mit diesem Verfahren in vorteilhafter Weise eine Anzahl von Sendelementen und/oder Empfangselementen und damit Herstellungskosten des Füllstandmessgeräts reduziert werden.

Gemäß einer Ausführungsform der Erfindung ist eine Position der Antennenanordnung relativ zur Steuereinheit fixiert. Beispielsweise kann die Antennenanordnung statisch und/oder fest mit der Steuereinheit verbunden sein. Dadurch kann in vorteilhafter Weise, etwa im Vergleich zu rotierbaren und/oder verschwenkbaren Antennenanordnungen, ein Verschleiß mechanisch beweglicher Komponenten reduziert und/oder vermieden werden.

Gemäß einer Ausführungsform der Erfindung werden die Antenneneinrichtungen jeweils zeitlich nacheinander, jeweils in unterschiedlichen Frequenzbändern, und/oder unter Verwendung eines Codemultiplexverfahrens betrieben und/oder aktiviert. Dies kann etwa durch die Steuereinrichtung getriggert, gesteuert und/oder geregelt werden. Auf diese Weise kann sichergestellt sein, dass die Radarsignale der einzelnen Antenneneinrichtungen sich nicht gegenseitig beeinflussen und voneinander unterschieden werden können. Bei dem Codemultiplexverfahren wird beispielsweise das Radarsignal mit einem für die jeweilige Antenneneinrichtung individuellen Code überlagert, so dass die reflektierten Signale mittels des Codes wiederum den einzelnen Antenneneinrichtungen zugeordnet werden können.

Gemäß einer Ausführungsform der Erfindung bilden die drei Antennenflächen Mantelflächen einer Pyramide oder eines Pyramidenstumpfs der Antennenordnung. Mit anderen Worten kann die Antennenanordnung pyramidenförmig, in Form eines Pyramidenstumpfes ausgebildet sein und/oder eine Pyramidenstruktur aufweisen. Eine Spitze der pyramidenförmigen Antennenanordnung kann etwa in Richtung der Füllgutoberfläche ausgerichtet sein. Dadurch kann sichergestellt sein, dass ein Halbraum mit einem Raumwinkel von wenigstens π mit der Antennenanordnung erfasst werden kann. Alternativ oder ergänzend sind die Antennenflächen zumindest teilweise miteinander verbunden. Beispielsweise können Kanten und/oder Ränder der Antennenflächen miteinander verbunden sein und so die Pyramidenstruktur bilden.

Gemäß einer Ausführungsform der Erfindung weist die Antennenanordnung mehr als drei Antenneneinrichtungen und mehr als drei Antennenflächen auf, wobei auf jeder der Antennenflächen jeweils eine Antenneneinrichtung angeordnet ist. Dadurch kann eine Genauigkeit der Bestimmung der Topologie Füllgutoberfläche durch Erhöhung der erfassten Richtungen gesteigert sein.

Gemäß einer Ausführungsform der Erfindung weist die Antennenanordnung eine Deckfläche auf, auf welcher eine weitere Antenneneinrichtung angeordnet ist. Beispielsweise kann die Deckfläche eine Spitze eines Pyramidenstumpfes bilden. Etwa kann eine Hornantenne und/oder eine weitere Antenneneinrichtung auf dem Pyramidenstumpf angeordnet sein, mit der in regelmäßigen Abständen eine Füllstandmessung zur Plausibilitätskontrolle durchgeführt werden kann.

Gemäß einer Ausführungsform der Erfindung ist die Steuereinheit dazu eingerichtet, basierend auf zumindest einem Teil der Messsignale der Antenneneinrichtungen eine Topologie der Füllgutoberfläche, einen Dichtewert eines Füllgutes, eine Masse des Füllgutes, ein Volumen des Füllgutes und/oder eine Viskosität des Füllgutes zu ermitteln du/oder zu berechnen. Derartige Größen können etwa basierend auf dem gemeinsamen Messsignal bzw. einem daraus resultierenden Messwert ermittelt werden. Auch können solche Größen durch Verarbeitung der einzelnen Messsignale der Antenneneinrichtungen gewonnen werden. Zur Berechnung voranstehend genannter Größen können auch für das Füllgut charakteristische weitere Größen berücksichtigt werden, wie beispielsweise eine Dielektrizitätskonstante oder eine Körnung des Füllgutes.

Ein weiterer Aspekt der Erfindung betrifft ein Verfahren zum Bestimmen einer Topologie einer Füllgutoberfläche mit einem Füllstandmessgerät, welches eine Steuereinheit und eine Antennenanordnung mit wenigstens drei auf jeweils einer Antennenfläche angeordneten Antenneneinrichtungen aufweist, wobei die Flächennormalenvektoren der Antennenflächen quer zueinander angeordnet sind. Das Verfahren weist die folgenden Schritte auf:
- Senden eines Radarsignals mit jeder der Antenneneinrichtungen;
- Empfangen eines an der Füllgutoberfläche reflektierten Signals mit jeder der Antenneneinrichtungen;
- Erzeugen eines mit dem reflektierten Signal korrelierenden Messsignals durch jede Antenneneinrichtung; und
- Kombinieren der Messsignale der Antenneneinrichtungen zu einem gemeinsamen Messsignal durch die Steuereinheit.

Merkmale und Elemente des Füllstandmessgerätes, so wie voranstehend und nachfolgend beschrieben, können Merkmale und Schritte des Verfahrens, so wie voranstehend und nachfolgend beschrieben, sein und umgekehrt.

Ein weiterer Aspekt der Erfindung betrifft ein Programmelement, das, wenn es auf einer Steuereinheit eines Füllstandmessgerätes ausgeführt wird, das Füllstandmessgerät anleitet, die Schritte des Verfahrens, so wie voranstehend und nachfolgend beschrieben, auszuführen.

Ein weiterer Aspekt der Erfindung betrifft ein computerlesbares Medium, auf dem ein Programmelement gespeichert ist, das, wenn es auf einer Steuereinheit eines Füllstandmessgerätes ausgeführt wird, das Füllstandmessgerät anleitet, die Schritte des Verfahrens, so wie voranstehend und nachfolgend beschrieben, auszuführen.

Im Folgenden werden Ausführungsbeispiele der Erfindung mit Bezug auf die beigefügten Figuren im Detail beschrieben.

### Kurze Beschreibung der Figuren

Fig. 1A und 1B zeigen jeweils ein topologieerfassendes Füllstandmessgerät gemäß Ausführungsbeispielen.
Fig. 2 zeigt ein topologieerfassendes Füllstandmessgerät gemäß einem Ausführungsbeispiel der Erfindung.
Fig. 3A zeigt ein topologieerfassendes Füllstandmessgerät gemäß einem Ausführungsbeispiel der Erfindung.
Fig. 3B zeigt eine Antenneneinrichtung des Füllstandmessgeräts der Fig. 3A.
Fig. 3C und 3D zeigen jeweils eine virtuelle Abbildung der Antenneneinrichtung der Fig. 3B.
Fig. 4 zeigt ein topologieerfassendes Füllstandmessgerät gemäß einem Ausführungsbeispiel der Erfindung.
Fig. 5 zeigt ein topologieerfassendes Füllstandmessgerät gemäß einem Ausführungsbeispiel der Erfindung.
Fig. 6 zeigt ein topologieerfassendes Füllstandmessgerät gemäß einem Ausführungsbeispiel der Erfindung.
Fig. 7 zeigt eine Draufsicht auf ein topologieerfassendes Füllstandmessgerät gemäß einem Ausführungsbeispiel der Erfindung.
Fig. 8 zeigt ein topologieerfassendes Füllstandmessgerät gemäß einem Ausführungsbeispiel der Erfindung.
Fig. 9 zeigt ein Flussdiagramm zur Illustration von Schritten eines Verfahrens zum Bestimmen einer Topologie einer Füllgutoberfläche.
Fig. 10 zeigt ein Flussdiagramm zur Illustration von Schritten eines Verfahrens zum Bestimmen einer Topologie einer Füllgutoberfläche.

Die Darstellungen in den Figuren sind lediglich schematisch und nicht maßstabsgetreu. Gleiche, gleichwirkende oder ähnliche Elemente können mit gleichen Bezugszeichen versehen sein.

### Detaillierte Beschreibung von Ausführungsbeispielen

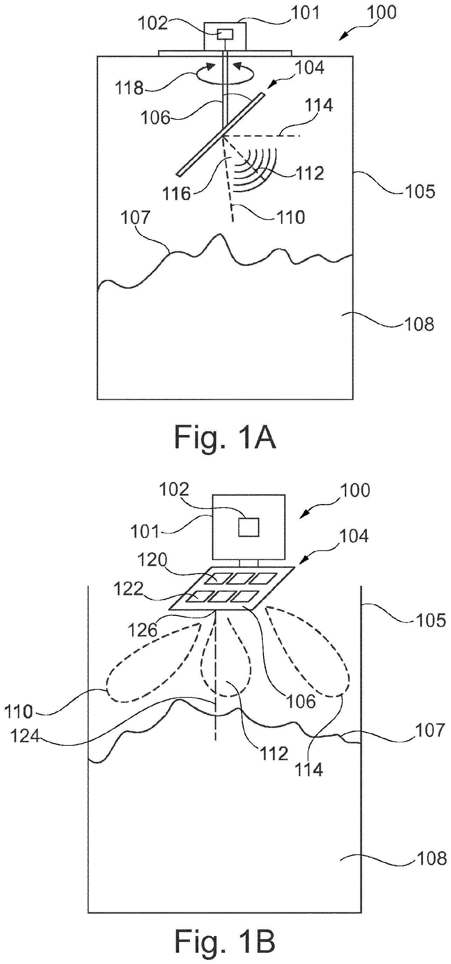

Fig. 1A zeigt ein topologieerfassendes Füllstandmessgerät 100 gemäß einem Ausführungsbeispiel. Das Füllstandmessgerät weist eine Steuereinheit 101 mit einem elektrischen Steuer-Schaltkreis 102 sowie eine Antenneneinrichtung 104 auf. Das Füllstandmessgerät der Fig. 1A ist als sogenannter rotierender Zeilenscanner ausgeführt, wobei die Antenneneinrichtung 104 über eine Antennenhalterung 106 mit der Steuereinheit 101 verbunden und/oder gekoppelt ist. Derartige Füllstandmessgeräte 100 werden insbesondere bei Schüttgutmessungen in einem Behälter 105 oder auf einer offenen Halde eingesetzt, wobei der Verlauf der Oberfläche 107 des Schüttguts 108 und/oder die Topologie der Füllgutoberfläche 107 des Füllgutes 108 ermittelt werden kann.

Die Antenneneinrichtung 104 kann mit einem oder mehreren Sendelementen und/oder Empfangselementen bestückt sein, was eine Veränderung der Hauptstrahlrichtung und/oder der Hauptempfangsrichtung 110, 112, 114 in vorgebbaren Winkelwerten 116 erlauben kann. Damit können Echosignale und/oder Echokurven aus den unterschiedlichen Hauptstrahlrichtungen und/oder Hauptempfangsrichtungen 110, 112, 114 erfasst werden. Durch zusätzliches Drehen 118 der Antennenhalterung 106, welche gleichsam eine Achse 106 festlegen kann, kann somit jeder Punkt der Füllgutoberfläche 107 des Füllguts 108 vermessen werden. Vorteilhaft an dieser kombinierten Vorrichtung zur elektronischen und mechanischen Strahlablenkung ist, dass im Falle der elektronischen Strahlablenkung lediglich ein Maximalwinkel 116 von typischerweise +-45° eingestellt werden muss, um den ganzen Behälter 105 bis zum Zustand vollständiger Befüllung vermessen zu können.

Aufgrund der verwendeten Mechanikkomponenten, wie etwa der drehbaren Antennenhalterung 106, kann das in Fig. 1 gezeigte Füllstandmessgerät 100 jedoch verschleißanfällig und teuer sein.

Fig. 1B zeigt ein weiteres topologieerfassendes Füllstandmessgerät 100 gemäß einem Ausführungsbeispiel. Sofern nicht anders beschrieben, weist das in Fig. 1B gezeigte Füllstandmessgerät 100 dieselben Elemente und Merkmale wie das in Fig. 1A gezeigte Füllstandmessgerät 100 auf.

Das in Fig. 1B gezeigte Füllstandmessgerät 100 weist eine zweidimensionale Anordnung von Sendeelementen 120 und/oder Empfangselementen 122 auf der Antenneneinrichtung 104 auf. Die für die Vermessung der Füllgutoberfläche 107 notwendige Strahlablenkung wird hier ausschließlich auf elektronischem Wege durch Verfahren zur analogen und/oder digitalen Strahlablenkung erreicht. Dabei werden die Hauptstrahlrichtung und/oder Hauptempfangsrichtung 110, 112, 114 auf elektronischem Weg, d.h. ohne mechanisch Bewegung von Komponenten des Füllstandmessgerätes 100, verändert. Nachteilig an diesem Aufbau kann jedoch sein, dass eine Strahlablenkung im Verhältnis zur Normalen 124 bzw. zum Normalenvektor 124 einer Antennenfläche 126 der Antenneneinrichtung 104 lediglich in einem Bereich von +-60° mit hinreichender Genauigkeit erfolgen kann. Eine Vermessung der Schüttgutlage und/oder der Füllgutoberfläche 107 nahezu vollständig gefüllter Behälter 105 ist daher nur schwer möglich.

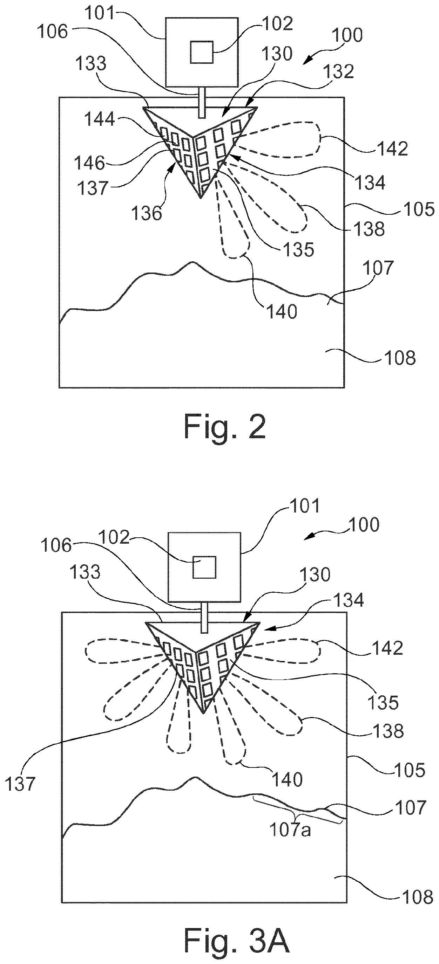

Fig. 2 zeigt ein topologieerfassendes Füllstandmessgerät 100 gemäß einem Ausführungsbeispiel der Erfindung. Sofern nicht anders beschrieben, weist das Füllstandmessgerät 100 der Fig. 2 dieselben Merkmale und Elemente auf wie die in voranstehenden Figuren beschriebenen Füllstandmessgeräte 100.

Das Füllstandmessgerät 100 der Fig. 2 weist eine Antennenanordnung 130 auf, welche mechanisch starr über eine Befestigungseinrichtung 106 und/oder Antennenhalterung 106 mit der Steuereinheit 101 verbunden ist. Durch diese Konstruktion kann ein Verschleiß von Komponenten des Füllstandmessgeräts 100 wirkungsvoll reduziert sein. Darüber hinaus besitzt die Antennenanordnung 130 wenigstens drei Antenneneinrichtungen 132, 134, 136. Die Antenneneinrichtungen 132, 134, 136 sind jeweils zum Senden eines Radarsignals und zum Empfangen eines an der Füllgutoberfläche 107 reflektierten Signals eingerichtet. Die Antenneneinrichtungen 132, 134, 136 können dabei jeweils eine Teilantenne und/oder Teilradargruppe 132, 134, 136 der Antennenanordnung 130 bezeichnen.

Die Antennenanordnung 130 weist ferner wenigstens drei Antennenflächen 133, 135, 137 auf, auf welchen jeweils eine der Antenneneinrichtungen 132, 134, 136 angeordnet ist. Bei dem in Fig. 2 gezeigten Ausführungsbeispiel ist die Antennenanordnung 130 pyramidenförmig ausgebildet, wobei jede der Antennenflächen 133, 135, 137 miteinander verbunden sind und die Mantelflächen der pyramidenförmigen Antennenanordnung 130 bilden. Gleichsam weist die Antennenanordnung 130 eine Pyramidenform auf, deren Spitze der Füllgutoberfläche 107 zugewandt ist. Die Flächennormalenvektoren der Antennenflächen 133, 135, 137 sind dabei quer zueinander ausgerichtet, so dass mit jeder der Antenneneinrichtungen 132, 134, 136 ein unterschiedlicher Raumwinkelbereich 138, entsprechend der Hauptstrahl- und/oder Hauptempfangsrichtung jeder Antenneneinrichtung 132, 134, 136, erfasst wird. Der Übersichtlichkeit halber ist in Fig. 2 nur der von Antenneneinrichtung 134 erfasste Raumwinkelbereich 138 dargestellt.

Jede Antenneneinrichtungen 132, 134, 136 kann mit Hilfe analoger und/oder digitaler Strahlformung eine Strahlablenkung in einem vorgebbaren Winkelbereich 138, 140, 142 erreichen. Mit anderen Worten kann mittels Verfahren der analogen und/oder digitalen Strahlformung der mit Antenneneinrichtung 134 erfasste Raumwinkelbereich 138 zu den Bereichen 140, 142 variiert werden. Gleiches gilt für die Antenneneinrichtungen 132, 136 (nicht dargestellt).

Hierzu weist jede der Antenneneinrichtungen 132, 134, 136 zumindest zwei oder eine Vielzahl an Sendeelementen 144 und/oder Empfangsantennen 146 auf. Die Sendelemente 144 und/oder die Empfangselemente 146 sind dabei flächig und/oder gleichmäßig auf den Antennenflächen 133, 135, 137 verteilt. Beispielsweise sind die Sendeelemente 144 und/oder die Empfangselemente 146 in Reihen und Spalten auf den Antennenflächen 133, 135, 137 angeordnet. Ein Abstand zwischen zwei benachbarten Sendeelementen 144 und/oder Empfangselementen 146 ist dabei kleiner oder gleich der halben Wellenlänge des Radarsignals. Aufgrund der sich in vorteilhafter Weise aus der Pyramidenstruktur und/oder Pyramidenform der Antennenanordnung 130 ergebenden Winkellage der Antenneneinrichtungen 132, 134, 136 kann auf ein Einstellen großer Ablenkwinkel durch analoge und/oder digitale Strahlformung verzichtet werden. Der Ablenkwinkel mag definiert sein als der Winkel der Hauptstrahlrichtung und/oder der Hauptempfangsrichtung einer Antenneneinrichtung 132, 134, 136 in Bezug auf die Normale und/oder den Normalenvektor der zugehörigen Antennenfläche 133, 135, 137. Typische Werte für real einzustellende Ablenkwinkel liegen im Bereich von +-45°, was mit den Verfahren zur analogen und/oder digitalen Strahlablenkung ohne allzu große Einbußen in Bezug auf die sich einstellende Halbwertsbreite der Antenne erreichbar ist. Da jede der Antenneneinrichtungen 132, 134, 136 beim Einstellen von Ablenkwinkeln im Bereich von +-45° nur einen Teil und/oder ein Teilgebiet der Füllgutoberfläche 107 erfassen kann, ergibt sich das vollständige Oberflächenprofil und/oder die vollständige Topologie der Füllgutoberfläche 107 erst durch die Kombination der durch die Antenneneinrichtungen 132, 134, 136 ermittelten Messsignale. Beispielsweise kann jede der Antenneneinrichtungen 132, 134, 136 dazu eingerichtet sein einen Abstandswert zu der Füllgutoberfläche 107 zu bestimmen, und die Steuereinheit 101 kann dazu eingerichtet sein, die einzelnen Abstandswerte zu kombinieren. Alternativ oder zusätzlich können die Antenneneinrichtungen 132, 134, 136 jeweils ein mit den reflektierten Signalen korrelierendes Messsignal erzeugen, und die Messsignale der einzelnen Antenneneinrichtungen 132, 134, 136 können von der Steuereinheit 101 entweder direkt kombiniert oder etwa zur Bestimmung einzelner Abstandswerte weiterverarbeitet werden.

Zusammenfassend ist erfindungsgemäß vorgesehen, dass das Füllstandmessgerät 100 ein Radar bzw. eine Antennenanordnung 130 bestehend aus mehreren für sich alleinstehenden Teilradargruppen 132, 134, 136 in Form der Antenneneinrichtungen 132, 134, 136 aufweist. Die Gesamtradarantenne 130 kann etwa eine Pyramide oder ein Pyramidenstumpf sein, wobei auf jeder Teilmantelfläche bzw. Antennenfläche 133, 135, 137 der Pyramide eine Teilradargruppe 132, 134, 136 angeordnet sein kann und wobei mit jeder Teilradargruppe 132, 134, 136 eine analoge und/oder digitale Strahlformung durchgeführt werden kann.

Alternativ zu der voranstehend erläuterten pyramidenförmigen Ausgestaltung der Antennenanordnung 130, in welcher die einzelnen Antennenflächen 133, 135, 137 direkt miteinander verbunden sind, können die einzelnen Antennenflächen 133, 135, 137 auch voneinander beabstandet und beispielsweise an einer Haltestruktur und/oder Stützstruktur angeordnet und/oder befestigt sein. Etwa können die einzelnen Antennenflächen über starre oder bewegliche und/oder elastische Elemente miteinander verbunden und/oder gekoppelt sein. Auch kann die Haltestruktur derart ausgebildet sein, dass eine Orientierung der Antennenflächen 133, 135, 137, beispielsweise durch mechanisches Verstellen, verändert werden kann. Es kann vorgesehen sein, dass der Durchmesser der Antennenvorrichtung durch ein mechanisches Verstellen während der Montage in einem Behälter reduziert werden kann. Hierdurch kann ermöglicht werden, dass die Antenne auch durch einen Stutzen mit einem kleinen Durchmesser hindurchgeführt werden kann. Dies kann einen Einsatz des Füllstandmessgerätes in Behältern mit kleinen Stutzen ermöglichen.

Ferner kann vorgesehen sein, dass die Antenneneinrichtungen 132, 134, 136 jeweils einzeln deaktivierbar sind. Dies kann beispielsweise erforderliche sein, wenn eine der Antenneneinrichtungen 132, 134, 136 in unmittelbarer Nähe zu einer Behälterwand des Behälters 105 angeordnet ist und so lediglich von der Behälterwand reflektierte Signale empfangen kann.

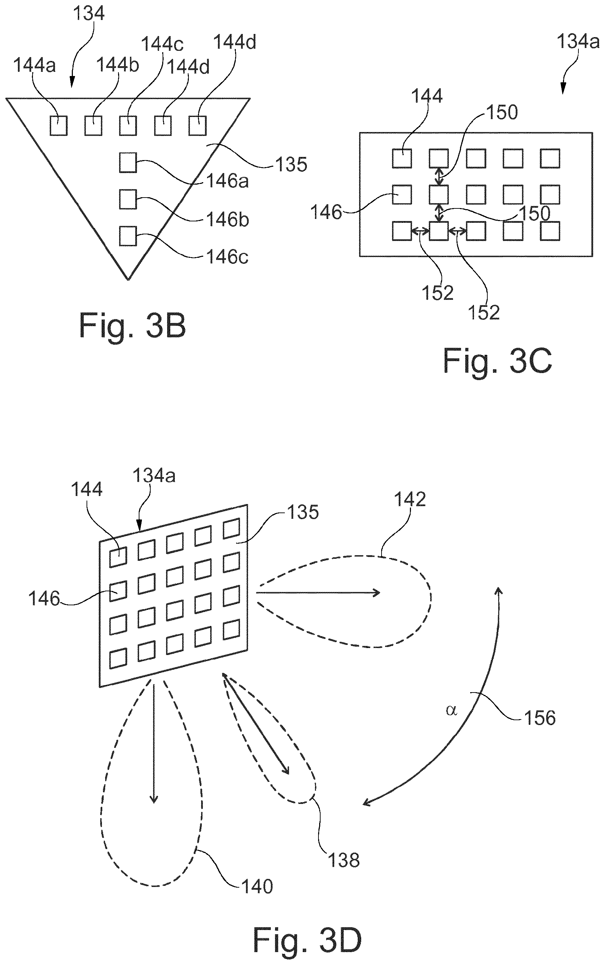

Fig. 3A zeigt ein topologieerfassendes Füllstandmessgerät 100 gemäß einem Ausführungsbeispiel der Erfindung. Fig. 3B zeigt eine Antenneneinrichtung 134 des Füllstandmessgeräts 100 der Fig. 3A. Fig. 3C und 3D zeigen jeweils eine virtuelle Abbildung 134 und/oder ein sich ergebendes virtuelles Array an der Antenneneinrichtung 134 der Fig. 3B. Sofern nicht anders beschrieben, weist das Füllstandmessgerät 100 der Fig. 3A-3D dieselben Merkmale und Elemente auf wie die in voranstehenden Figuren beschriebenen Füllstandmessgeräte 100.

Die Antennenflächen 133, 135, 137 der pyramidenförmigen Antennenanordnung 130 des Füllstandmessgeräts 100 der Fig. 3A sind nicht mehr flächig mit Sendeelementen 144a-d und/oder Empfangselementen 146a-c belegt, sondern in Form eines "T". Durch diese Anordnung kann die Komplexität des Füllstandmessgerätes 100 ohne Einbußen an Messgenauigkeit reduziert werden.

In Fig. 3B ist die T-förmige Anordnung der Sendeelemente 144a-d und der Empfangselemente 146a-c auf der Antennenfläche 135 für die Antenneneinrichtung 134 im Detail gezeigt. Die übrigen Antenneneinrichtungen 132, 136 und/oder die übrigen Antennenflächen 135, 137 der Antennenanordnung 130 sind analog ausgebildet. Die Sendeelemente 144a-144d sind in einer Reihe angeordnet und bilden den horizontalen Schenkel des "T", wobei die Sendeelemente 144a-144d von der Steuereinheit 101 des Füllstandmessgerätes 100 im Zeitmultiplex nacheinander aktiviert, angesteuert und/oder betrieben werden. Die Empfangselemente 146a-146c sind in einer Spalte angeordnet und bilden den vertikalen Schenkel des "T", wobei mit den Empfangselementen 146a-146c die an der Schüttgutoberfläche 107 reflektierten Signale empfangen werden können. Durch eine geeignete von der Steuereinheit 101 und/oder einer Elektronik der Antenneneinrichtung 134 vorgenommene Auswertung der erhaltenen Echosignale kann eine Kollektion an Echokurven identifiziert werden, welche exakt der Kollektion entspricht, welche mit einer zur Antenneneinrichtung 134 zugehörigen virtuellen Antenneneinrichtung 134a ermittelt werden kann, wie in Fig. 3C gezeigt. Mit anderen Worten kann mittels Zeitmultiplexing und geeigneter Auswertung mit den T-förmig angeordneten Sendeelementen 144a-144d und Empfangselementen 146a-146c dasselbe Messergebnis erzielt werden, wie mit dem in Fig. 3C gezeigten rechteckigen virtuellen Array 134a von Sendeelementen 144 und Empfangselementen 146. Da die Elemente 144, 146 dieses virtuellen Arrays 134a sowohl in X-Richtung als auch in Y-Richtung einen Abstand 150, 152 von kleiner gleich der halben Wellenlänge des verwendeten Radarsignals aufweisen, kann eine eindeutige digitale und/oder analoge Strahlformung auf Basis dieser Daten durchgeführt werden, ohne dass durch aufkommende Gitterkeulen die Messgenauigkeit reduziert wird.

Fig. 3D verdeutlicht den Schritt der digitalen Strahlformung anhand des virtuell erzeugten Arrays 134a. Unter Verwendung von Verfahren zur digitalen Strahlformung kann prinzipiell lediglich ein begrenzter Ablenkwinkel 156 eingestellt werden kann. Typische Werte reichen hier von -60° bis +60°, sowohl für die Azimutal- als auch für die Elevationsrichtung. Da die Antennenfläche 135 in Bezug auf die Montageausrichtung des Füllstandmessgerätes 100 (vgl. Fig. 2 und 3A) jedoch schon geneigt ist, mag dieser Winkelbereich ausreichen, um ein Teilgebiet 107a der Schüttgutoberfläche 107 zu vermessen, und zwar unabhängig vom Befüllungsgrad des Behälters 105, also insbesondere auch bei nahezu vollständig gefülltem Behälter 105.

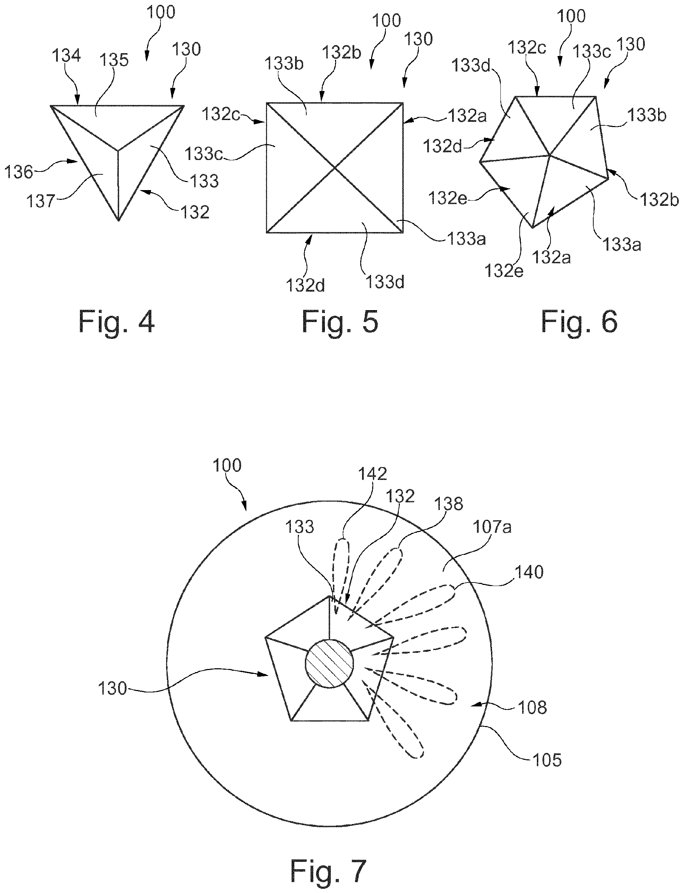

Fig. 4 zeigt ein topologieerfassendes Füllstandmessgerät 100 gemäß einem Ausführungsbeispiel der Erfindung. Sofern nicht anders beschrieben, weist das Füllstandmessgerät 100 der Fig. 4 dieselben Merkmale und Elemente auf wie die in voranstehenden Figuren beschriebenen Füllstandmessgeräte 100.

Fig. 4 zeigt eine weitere mögliche Ausführungsform einer Antennenanordnung 130 von unten betrachtet. Die Antennenanordnung 130 weist eine dreiseitige Pyramidenstruktur mit drei Antennenflächen 133, 135, 137 auf, welche je eine Antenneneinrichtung 132, 134, 136 des Füllstandmessgerätes 100 beherbergen.

Fig. 5 zeigt ein topologieerfassendes Füllstandmessgerät 100 gemäß einem Ausführungsbeispiel der Erfindung. Sofern nicht anders beschrieben, weist das Füllstandmessgerät 100 der Fig. 5 dieselben Merkmale und Elemente auf wie die in voranstehenden Figuren beschriebenen Füllstandmessgeräte 100.

Fig. 5 zeigt eine weitere mögliche Ausführungsform einer Antennenanordnung 130 von unten betrachtet. Die Antennenanordnung 130 weist vier Antennenflächen 133a-133d und vier Antenneneinrichtungen 134a-134d auf.

Fig. 6 zeigt ein topologieerfassendes Füllstandmessgerät 100 gemäß einem Ausführungsbeispiel der Erfindung. Sofern nicht anders beschrieben, weist das Füllstandmessgerät 100 der Fig. 6 dieselben Merkmale und Elemente auf wie die in voranstehenden Figuren beschriebenen Füllstandmessgeräte 100.

Fig. 6 zeigt eine weitere mögliche Ausführungsform einer Antennenanordnung 130 von unten betrachtet. Die Antennenanordnung 130 weist fünf Antennenflächen 133a-133e und fünf Antenneneinrichtungen 134a-134e auf. Grundsätzlich kann eine beliebige Anzahl von Antenneneinrichtungen und Antennenflächen vorgesehen sein, wobei jedoch die Komplexität der Antennenanordnung 130 mit steigender Zahl zunimmt.

Fig. 7 zeigt eine Draufsicht auf ein topologieerfassendes Füllstandmessgerät 100 gemäß einem Ausführungsbeispiel der Erfindung. Sofern nicht anders beschrieben, weist das Füllstandmessgerät 100 der Fig. 7 dieselben Merkmale und Elemente auf wie die in voranstehenden Figuren beschriebenen Füllstandmessgeräte 100.

Fig. 7 zeigt eine Ansicht auf einen Behälter 105 aus der Vogelperspektive und verdeutlicht den Betriebsablauf bei einer Verwendung einer Vielzahl an Antenneneinrichtungen 132. Das in Fig. 7 gezeigte Füllstandmessgerät 100 weist insgesamt fünf Antennenflächen 133 und fünf Antenneneinrichtungen 132, analog Fig. 6, auf. Jede dieser Antenneneinrichtungen 132 bzw. Teilantennen 132 wird vom Füllstandmessgerät 100 und/oder der Steuereinheit 101 nacheinander aktiviert, um eine gegenseitige Beeinflussung der Messung untereinander zu verhindern. Alternativ ist es denkbar, dass die jeweiligen Antenneneinrichtungen 132 zur Vermeidung von gegenseitiger Beeinflussung bei gleichzeitigem Senden ein Frequenz- und/oder Codemultiplexradarverfahren verwenden. Die Topologie erfassende Messung mit der Antenneneinrichtung 132 führt beispielsweise zu Messwerten, welche zur Oberfläche im Bereich 107a des Schüttgutes 108 im Behälter 105 zugeordnet werden können. Da der von der Antenneneinrichtung 132 zu vermessende Bereich 107a räumlich begrenzt ist, wird nur eine relativ kleine Änderung der Hauptstrahl- und/oder Hauptempfangsrichtung 138, 140, 142 in Bezug auf die Flächennormale der Antenneneinrichtung 132 notwendig. Eine hohe Qualität der Messung wird auf diese Weise sichergestellt.

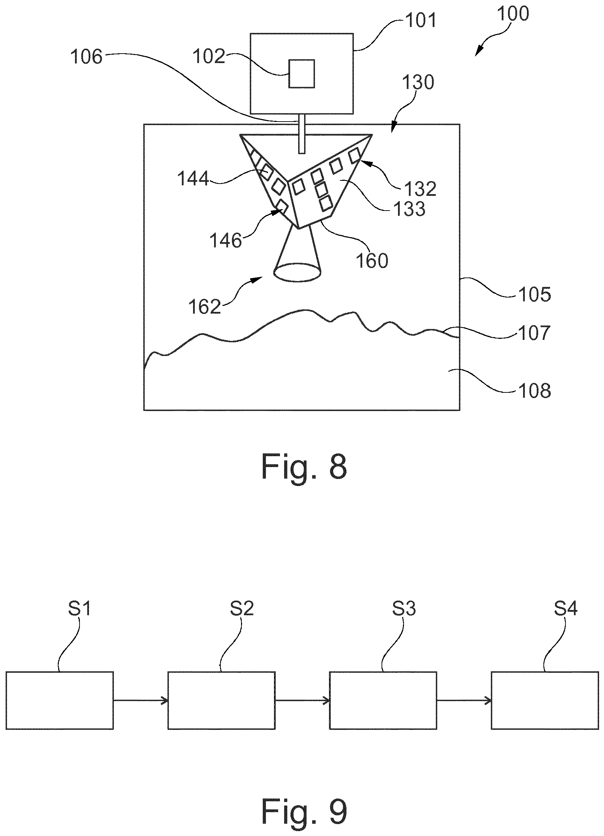

Fig. 8 zeigt ein topologieerfassendes Füllstandmessgerät 100 gemäß einem Ausführungsbeispiel der Erfindung. Sofern nicht anders beschrieben, weist das Füllstandmessgerät 100 der Fig. 8 dieselben Merkmale und Elemente auf wie die in voranstehenden Figuren beschriebenen Füllstandmessgeräte 100.

Das in Fig. 8 gezeigte Füllstandmessgerät 100 kann als kombiniertes Füllstand- und Topologiemessgerät erachtet werden. Das Füllstandmessgerät besitzt eine pyramidenförmig ausgestaltete Antennenanordnung 130, wobei der Grundkörper als Pyramidenstumpf ausgebildet ist, auf dessen Antennenflächen 133 und/oder Mantelflächen 133 die für die Strahlformung notwendigen Sende- und/oder Empfangselemente 144, 146 angeordnet sind. Auf der dem Füllgut 108 zugewandten Deckfläche 160 des Pyramidenstumpfs kann zur Erhöhung der Messsicherheit eine weitere Antenne 162, beispielsweise eine Hornantenne 162 angeordnet und/oder montiert sein, welche in vorgebbaren Zeitabständen dazu verwendet wird, eine konventionelle Füllstandmessung durchzuführen und somit durch eine Plausibilitätsbetrachtung und/oder Plausibilitätskontrolle die ordnungsgemäße Funktion des Füllstandmessgeräts 100, etwa in sicherheitskritischen Anlagen, nachzuweisen. Ebenfalls ist es denkbar, die Deckfläche 160 mit einer weiteren Antenneneinrichtung 132 zu bestücken. Es kann auch vorgesehen sein, auf das Anbringen einer zusätzlichen Antenne zu verzichten, und die Antennenanordnung 130 mit dem einem Pyramidenstumpf ähnelndem Grundkörper zur reinen Topologiemessung nach den voranstehend dargelegten Prinzipien zu verwenden. In diesem Fall ergibt sich eine Reduktion der Antennengröße, was insbesondere in kleinen Behältern 105 vorteilhaft sein kann.

Fig. 9 zeigt ein Flussdiagramm zur Illustration von Schritten eines Verfahrens zum Bestimmen einer Topologie einer Füllgutoberfläche mit einem Füllstandmessgerät 100, welches eine Steuereinheit 101 und eine Antennenanordnung 130 mit wenigstens drei auf jeweils einer Antennenfläche 133 angeordneten Antenneneinrichtungen 132 aufweist, wobei die Flächennormalenvektoren der Antennenflächen 133 quer zueinander angeordnet sind.

In einem ersten Schritt S1 wird ein Radarsignal mit jeder der drei Antenneneinrichtungen 132 gesendet. Insbesondere können die Radarsignale zeitlich versetzt zueinander und/oder nacheinander gesendet werden. In einem weiteren Schritt S2 werden die an der Füllgutoberfläche 107 reflektierten Signale mit jeder der Antenneneinrichtungen 132 empfangen. In einem Schritt S3 wird ein mit dem reflektierten Signal korrelierendes Messsignal durch jede Antenneneinrichtung 132 erzeugt. In einem vierten Schritt S4 werden die Messsignale der Antenneneinrichtungen 132 zu einem gemeinsamen Messsignal durch die Steuereinheit 101 kombiniert.

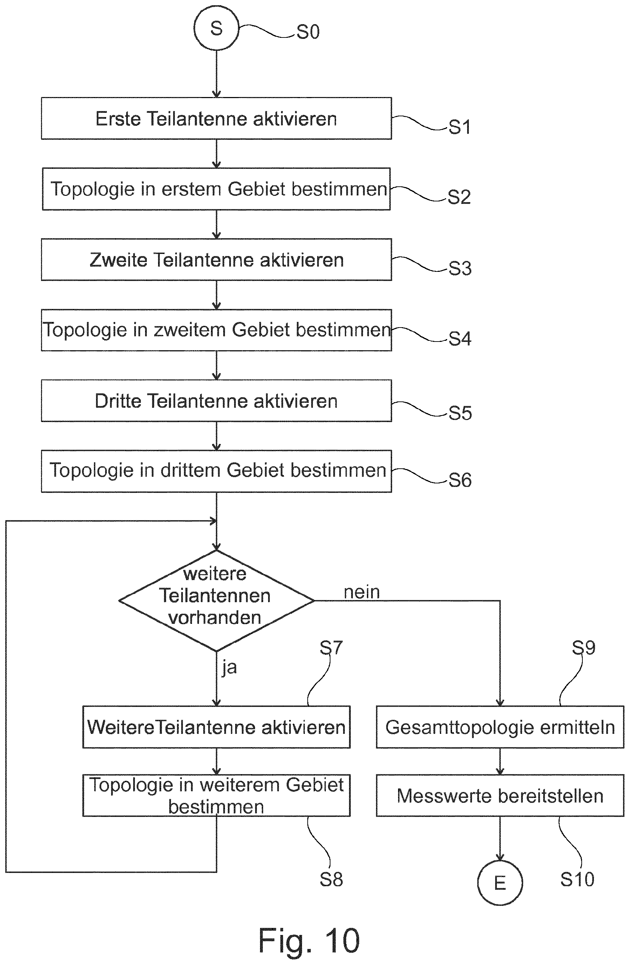

Fig. 10 zeigt ein Flussdiagramm zur Illustration von Schritten eines Verfahrens zum Bestimmen einer Topologie einer Füllgutoberfläche. Fig. 10 verdeutlicht beispielhaft einen Betriebsablauf des erfindungsgemäßen Füllstandmessgeräts 100.

Das Verfahren beginnt im Startzustand S0. Zunächst wird im Schritt S1 die erste Teilantenne 132 und/oder Antenneneinrichtung 132 der Antennenanordnung 130 aktiviert. Im Schritt S2 wird unter Verwendung dieser Antenneneinrichtung 132 nach bekannten Verfahren, wie analoge Strahlformung, digitale Strahlformung und/oder Bildung virtueller Arrays, die Topologie in einem ersten Teilgebiet der Oberfläche 107 des Schüttguts 108 bestimmt. Die ermittelte Topologie wird in einem Speicher des Füllstandmessgerätes 100 abgelegt. Im Schritt S3 wird die zweite Teilantenne 134 und/oder Antenneneinrichtung 134 aktiviert, und nach obigem Schema die Topologie in einem zweiten Teilgebiet der Schüttgutoberfläche 107 in Schritt S4 ermittelt. Die Kennwerte werden ebenfalls im Speicher abgelegt. Im Schritt S5 wird die dritte Teilantenne 136 und/oder Antenneneinrichtung 136 aktiviert, und die mit dieser im Schritt S6 ermittelte Topologie wird im Speicher abgelegt. Falls weitere Teilantennen und/oder Antenneneinrichtungen vorhanden sind, so werden auch diese aktiviert in Schritt S7 und die unterhalb dieser Antenneneinrichtungen befindlichen Teiltopologien der Schüttgutoberfläche 107 werden in Schritt S8 ermittelt und im Speicher abgelegt. Sobald alle Antenneneinrichtungen durchlaufen sind, wird im Schritt S9 die resultierende Gesamttopologie des Schüttguts 108 im Behälter 105 ermittelt. Der Verlauf der Oberfläche 107 und/oder der daraus abgeleitete Werte wie Füllstand, Masse, Volumen, und/oder Schüttgutlage werden im Schritt S10 von der Steuereinheit 101 ermittelt und als kombiniertes Messsignal und/oder als Messwert bereitgestellt, beispielsweise an eine übergeordnete Steuerung in Schritt S10 übergeben. Etwa kann der Messwert in Schritt S10 an eine Leitstation übertragen und/oder übermittelt werden. Das Verfahren endet schließlich in Schritt S11.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessgerät (100) zum Bestimmen einer Topologie einer Füllgutoberfläche (107), aufweisend:
eine Antennenanordnung (130) mit wenigstens drei Antenneneinrichtungen (132, 134, 136), welche jeweils zum Senden eines Radarsignals und zum Empfangen eines an der Füllgutoberfläche (107) reflektierten Signals eingerichtet sind; und
eine Steuereinheit (101);
wobei die Antennenanordnung (130) wenigstens drei Antennenflächen (133, 135, 137) aufweist, deren Flächennormalenvektoren quer zueinander angeordnet sind;
wobei auf jeder Antennenfläche (133, 135, 137) eine Antenneneinrichtung (132, 134, 136) angeordnet ist, so dass mit jeder Antenneneinrichtung ein unterschiedlicher Raumwinkelbereich (138, 140, 142) erfassbar ist;
wobei die Antenneneinrichtungen (132, 134, 136) jeweils dazu eingerichtet sind, basierend auf dem reflektierten Signal ein Messsignal zu erzeugen;
wobei die Steuereinheit (101) dazu eingerichtet ist, die Messsignale der Antenneneinrichtungen weiterzuverarbeiten und/oder zu einem gemeinsamen Messsignal zu kombinieren; und
wobei die mit den Antenneneinrichtungen (132, 134, 136) erfassbaren Raumwinkelbereiche (138, 140, 142) jeweils durch analoge und/oder digitale Strahlformung variierbar sind.

2. Füllstandmessgerät (100) nach Anspruch 1,
wobei ein Ablenkwinkel zwischen einer Hauptstrahlrichtung (138) jeder Antenneneinrichtung (132, 134, 136) und dem zugehörigen Flächennormalenvektor der Antennenfläche (133, 135, 137) in einem Bereich von +/- 45° liegt.

3. Füllstandmessgerät (100) nach einem der voranstehenden Ansprüche,
wobei die Antenneneinrichtungen (132, 134, 136) jeweils wenigstens ein Sendeelement (144) zum Senden des Radarsignals und wenigstens zwei Empfangselemente (146) zum Empfangen des reflektierten Signals aufweisen; oder
wobei die Antenneneinrichtungen (132, 134, 136) jeweils wenigstens zwei Sendeelemente (144) zum Senden des Radarsignals und wenigstens ein Empfangselement (146) zum Empfangen des reflektierten Signals aufweisen.

4. Füllstandmessgerät (100) nach Anspruch 3,
wobei die Sendelemente (144) und die Empfangselemente (146) der Antenneneinrichtungen (132, 134, 136) flächig auf den zugehörigen Antennenflächen (133, 135, 137) angeordnet sind; und/oder
wobei direkt benachbarte Sendeelemente (144) und/oder Empfangselemente (146) einer jeden Antenneneinrichtung (132, 134, 136) in einem Abstand kleiner oder gleich der halben Wellenlänge des Radarsignals voneinander beabstandet sind.

5. Füllstandmessgerät (100) nach einem der Ansprüche 3 oder 4,
wobei die Sendelemente (144) und die Empfangselemente (146) der Antenneneinrichtungen (132, 134, 136) T-förmig auf den zugehörigen Antennenflächen (133, 135, 137) angeordnet sind.

6. Füllstandmessgerät (100) nach einem der voranstehenden Ansprüche,
wobei eine Position der Antennenanordnung (130) relativ zur Steuereinheit (101) fixiert ist.

7. Füllstandmessgerät (100) nach einem der voranstehenden Ansprüche,
wobei die Antenneneinrichtungen (132, 134, 136) jeweils zeitlich nacheinander, jeweils in unterschiedlichen Frequenzbändern, und/oder unter Verwendung eines Codemultiplexverfahrens betrieben werden.

8. Füllstandmessgerät (100) nach einem der voranstehenden Ansprüche,
wobei die drei Antennenflächen (133, 135, 137) Mantelflächen einer Pyramide oder eines Pyramidenstumpfs der Antennenordnung (130) bilden; und/oder
wobei die Antennenflächen (133, 135, 137) zumindest teilweise miteinander verbunden sind.

9. Füllstandmessgerät (100) nach einem der voranstehenden Ansprüche,
wobei die Antennenanordnung (130) mehr als drei Antenneneinrichtungen (132a-132e) und mehr als drei Antennenflächen (133a-133e) aufweist, wobei auf jeder der Antennenflächen (133a-133e) jeweils eine Antenneneinrichtung (132a-132e) angeordnet ist.

10. Füllstandmessgerät (100) nach einem der voranstehenden Ansprüche,
wobei die Antennenanordnung (130) eine Deckfläche (160) aufweist, auf welcher eine weitere Antenneneinrichtung (162) angeordnet ist.

11. Füllstandmessgerät (100) nach einem der voranstehenden Ansprüche,
wobei die Steuereinheit (101) dazu eingerichtet ist, basierend auf zumindest einem Teil der Messsignale der Antenneneinrichtungen (132, 134, 136) eine Topologie der Füllgutoberfläche (107), einen Dichtewert eines Füllgutes (108), eine Masse des Füllgutes (108), ein Volumen des Füllgutes (108) und/oder eine Viskosität des Füllgutes (108) zu ermitteln.

12. Verfahren zum Bestimmen einer Topologie einer Füllgutoberfläche (107) mit einem Füllstandmessgerät (100), welches eine Steuereinheit (101) und eine Antennenanordnung (130) mit wenigstens drei auf jeweils einer Antennenfläche (133, 135, 137) angeordneten Antenneneinrichtungen (132, 134, 136) aufweist, wobei die Flächennormalenvektoren der Antennenflächen (133, 135, 137) quer zueinander angeordnet sind, wobei mit jeder Antenneneinrichtung ein unterschiedlicher Raumwinkelbereich (138, 140, 142) erfassbar ist und wobei die mit den Antenneneinrichtungen (132, 134, 136) erfassbaren Raumwinkelbereiche (138, 140, 142) jeweils durch analoge und/oder digitale Strahlformung variierbar sind, das Verfahren aufweisend die Schritte:
- Senden eines Radarsignals mit jeder der Antenneneinrichtungen (132, 134, 136);
- Empfangen eines an der Füllgutoberfläche (107) reflektierten Signals mit jeder der Antenneneinrichtungen (132, 134, 136);
- Erzeugen eines mit dem reflektierten Signal korrelierenden Messsignals durch jede Antenneneinrichtung (132, 134, 136); und
- Kombinieren der Messsignale der Antenneneinrichtungen (132, 134, 136) zu einem gemeinsamen Messsignal durch die Steuereinheit (101).

13. Programmelement, das, wenn es auf einer Steuereinheit (101) eines Füllstandmessgerätes (100) ausgeführt wird, das Füllstandmessgerät (100) anleitet, die Schritte des Verfahrens nach Anspruch 12 auszuführen.

14. Computerlesbares Medium, auf dem ein Programmelement nach Anspruch 13 gespeichert ist.

## Claims

1. A fill level measurement device (100) for determining a topology of a surface of a filling material, comprising:
an antenna arrangement (130) with at least three antenna devices (132, 134, 136), each being configured to transmit a radar signal and to receive a signal reflected at the surface of the filling material; and
a control unit (101);
wherein the antenna arrangement (130) comprises at least three antenna faces (133, 135, 137), the surface normal vectors of which are transversally arranged relative to each other;
wherein a respective one of the antenna devices (132, 134, 136) is arranged on each antenna face (133, 135, 137) so that a different solid angle range (138, 140, 142) is detectable by each of the antenna devices (132, 134, 136);
wherein each of the antenna devices (132, 134, 136) is configured to generate a measurement signal based on the reflected signal;
wherein the control unit (101) is configured to process the measurement signals of the antenna devices and/or to combine the measurement signals to form a common measurement signal; and
wherein the solid angle ranges (138, 140, 142) detectable by the antenna devices (132, 134, 136) are each variable using analogue beam forming and/or digital beam forming.

2. The fill level measurement device (100) of claim 1,
wherein an angle of deflection between a main beam direction (138) of each antenna device (132, 134, 136) and the surface normal vector of the respective antenna face is in a range of +/- 45°.

3. The fill level measurement device (100) of one of the preceding claims,
wherein each of the antenna devices (132, 134, 136) has at least one transmitting element (144) configured to transmit the radar signal and at least two receiving elements (146) configured to receive the reflected signal; or
wherein each of the antenna devices (132, 134, 136) has at least two transmitting elements (144) configured to transmit the radar signal and at least one receiving element (146) configured to receive the reflected signal.

4. The fill level measurement device (100) of claim 3,
wherein the transmitting elements (144) and the receiving elements (146) of the antenna devices (132, 134, 136) are arranged across the respective antenna faces (133, 135, 137); and/or
wherein directly neighbouring transmitting elements (144) and/or receiving elements (146) of each antenna device (132, 134, 136) are spaced-apart from each other at a distance smaller or equal to half of the wave length of the radar signal.

5. The fill level measurement device (100) of claim 3 or 4,
wherein the transmitting elements (144) and the receiving elements (146) of the antenna devices (132, 134, 136) are arranged in a T-shape on the respective antenna faces (133, 135, 137).

6. The fill level measurement device (100) of one of the preceding claims,
wherein a position of the antenna arrangement (130) is fixed relative to the unit control (101).

7. The fill level measurement device (100) of one of the preceding claims,
wherein the antenna devices (132, 134, 136) are operated temporally sequentially with respect to one another, are each operated in different frequency bands and/or using a code multiplexing procedure.

8. The fill level measurement device (100) of one of the preceding claims,
wherein the three antenna faces (133, 135, 137) form lateral surfaces of a pyramid or a truncated pyramid of the antenna arrangement (130); and/or
wherein the antenna faces (133, 135, 137) are at least partially coupled to each other.

9. The fill level measurement device (100) of one of the preceding claims,
wherein the antenna arrangement (130) comprises more than three antenna devices (132a-132e) and more than three antenna faces (133a-133e), wherein on each antenna face (133a-133e) one of the antenna devices is arranged.

10. The fill level measurement device (100) of one of the preceding claims,
wherein the antenna arrangement (130) comprises a top face (160) on which a further antenna device is arranged.

11. The fill level measurement device (100) of one of the preceding claims,
wherein the control unit (101) is configured to determine, based on at least a part of the measurement signals of the antenna devices (132, 134, 136), a topology of a surface of the filling material (107), a density value of the filling material (108), a mass of the filling material (108), a volume of the filling material (108) and/or a viscosity of the filling material (108).

12. A method of determining a topology of a surface of a filling material (107) with a fill level measurement device (100) comprising a control unit (101) and an antenna arrangement (130) with at least three antenna devices, each being arranged on a respective antenna face (133, 135, 137), wherein surface normal vectors of the antenna faces (133, 135, 137) are transversally arranged relative to one another, wherein different solid angle ranges (138, 140, 142) are detectable by each of the antenna devices (132, 134, 136), and wherein the solid angle ranges (138, 140, 142) detectable by the antenna devices are each variable using analogue beam forming and/or digital beam forming , the method comprising the following steps:
- transmitting a radar signal with each antenna device (132, 134, 136);
- receiving a signal reflected from the surface of the filling material (107) with each antenna device (132, 134, 136);
- generating a measurement signal correlating with the reflected signal using each antenna device (132, 134, 136); and
- combining the measurement signals of the antenna devices (132, 134, 136) to form a common measurement signal using the control unit (101).

13. A program element, which, when executed by a control unit (101) of a fill level measurement device (100), instructs the fill level measurement device to perform the steps of the method of claim 12.

14. A computer readable medium on which a program element of claim 13 is stored.

## Revendications

1. Appareil de mesure de niveau de remplissage (100) pour déterminer une topologie d'une surface d'un produit de remplissage, comprenant:
un agencement d'antenne (130) avec au moins trois dispositifs d'antenne (132, 134, 136), chacun étant configuré pour émettre un signal radar et recevoir un signal réfléchi à la surface du produit de remplissage; et
une unité de contrôle (101) ;
dans lequel l'agencement d'antennes (130) comprend au moins trois faces d'antenne (133, 135, 137), les vecteurs normaux aux faces de celles-ci étant agencés de manière transversal les uns par rapport aux autres;
dans lequel sur chaque surface d'antenne (133, 135, 137) un dispositif d'antenne respectif (132, 134, 136) est agencé, de sorte qu'une zone angulaire solide (138, 140, 142) différente est détectable par chaque dispositif d'antenne (132, 134, 136);
dans lequel chaque dispositif d'antenne (132, 134, 136) est configuré pour générer un signal de mesure sur la base du signal réfléchi ;
dans lequel l'unité de contrôle (101) est configurée pour traiter les signaux de mesure des dispositifs d'antenne et/ou pour combiner les signaux de mesure pour former un signal de mesure commun; et
dans lequel les zones angulaires solides (138, 140, 142) détectables par les dispositifs d'antenne (132, 134, 136) sont chacune variable utilisant une formation de faisceau analogue et/ou une formation de faisceau digitale.

2. Appareil de mesure de niveau de remplissage (100) selon la revendication 1,
dans lequel un angle de déflexion entre une direction principale de faisceau (138) de chaque dispositif d'antenne (132, 134, 136) et le vecteur normal à la surface respectif de la face d'antenne se trouve dans un domaine de plus ou moins 45°.

3. Appareil de mesure de niveau de remplissage (100) selon l'une quelconque des revendications précédentes,
dans lequel les dispositifs d'antenne (132, 134, 136) comprennent respectivement au moins un élément émetteur (144) configuré pour émettre le signal radar et au moins deux éléments récepteurs (146) configurés pour recevoir le signal réfléchi; ou
dans lequel les dispositifs d'antenne (132, 134, 136) comprennent respectivement au moins deux éléments émetteurs (144) configurés pour émettre le signal radar et au moins un élément récepteur (146) configuré pour recevoir le signal réfléchi;

4. Appareil de mesure de niveau de remplissage (100) selon la revendication 3,
dans lequel les éléments émetteurs (144) et les éléments récepteurs (146) des dispositifs d'antenne (132, 134, 136) sont agencés de manière horizontale sur les faces d'antenne (133, 135, 137) respectives ; et/ou
dans lequel les éléments émetteurs voisins direct (144) et/ou les éléments récepteurs (146) voisins direct de chaque dispositif d'antenne (132, 134, 136) sont agencés à une distance plus petite ou égale à la demi longueur d'onde du signal radar les uns des autres.

5. Appareil de mesure de niveau de remplissage (100) selon l'une quelconque des revendications 3 ou 4,
dans lequel les éléments émetteurs (144) et les éléments récepteurs (146) des dispositifs d'antenne (132, 134, 136) sont agencés en T sur les faces d'antenne (133, 135, 137) respectives.

6. Appareil de mesure de niveau de remplissage (100) selon l'une quelconque des revendications précédentes,
dans lequel une position de l'agencement d'antennes (130) est fixée relative à l'unité de contrôle (101).

7. Appareil de mesure de niveau de remplissage (100) selon l'une quelconque des revendications précédentes,
dans lequel les dispositifs d'antenne (132, 134, 136) fonctionnent respectivement chronologiquement successivement les uns après les autre, chacun dans des bandes de fréquence différentes et/ou utilisant une méthode de multiplexage à code.

8. Appareil de mesure de niveau de remplissage (100) selon l'une quelconque des revendications précédentes,
dans lequel les trois faces d'antenne (133, 135, 137) forment des surfaces latérales d'une pyramide ou d'une base de pyramide de l'agencement d'antennes (130) ; et/ou
dans lequel les surfaces d'antenne (133, 135, 137) sont au moins partiellement liées les unes aux autres.

9. Appareil de mesure de niveau de remplissage (100) selon l'une quelconque des revendications précédentes,
dans lequel l'agencement d'antennes (130) comprend plus de trois dispositifs d'antenne (132a-132e) et plus de trois faces d'antenne (133a-133e), sur chaque face d'antenne (133a-133e) étant respectivement agencé un dispositif d'antenne (132a-132e).

10. Appareil de mesure de niveau de remplissage (100) selon l'une quelconque des revendications précédentes,
dans lequel l'agencement d'antennes (130) comprend une face supérieur (160), sur laquelle un dispositif d'antenne supplémentaire est agencé.

11. Appareil de mesure de niveau de remplissage (100) selon l'une quelconque des revendications précédentes,
dans lequel l'unité de contrôle (101) est configurée pour déterminer, sur la base d'au moins une partie des signaux de mesure des dispositifs d'antenne (132, 134, 136), une topologie d'une surface du produit de remplissage (107), une valeur de densité du produit de remplissage (108), une masse du produit de remplissage (108), un volume du produit de remplissage (108) et/ou une viscosité du produit de remplissage (108).

12. Méthode de détermination d'une topologie d'une surface d'un produit de remplissage (107) avec un appareil de mesure de niveau de remplissage (100) comprenant une unité de contrôle (101) et un agencement d'antennes (130) avec au moins trois dispositifs d'antenne, chacun étant agencé sur une face d'antenne (133, 135, 137) respective, les vecteurs normaux aux surfaces d'antenne (133, 135, 137) étant agencés transversalement les uns aux autres, une zone angulaire solide (138, 140, 142) différente étant détectable par chaque dispositif d'antenne et les zones angulaires solide (138, 140, 142) détectées par les dispositifs d'antenne (132, 134, 136) étant chacune variable via une formation de faisceau analogue et/ou une formation de faisceau digitale,
la méthode étant **caractérisée par** les étapes suivantes consistant à :
- émettre un signal radar avec chaque dispositif d'antenne (132, 134, 136) ;
- recevoir un signal réfléchi à la surface du produit de remplissage (107) avec chaque dispositif d'antenne (132, 134 ,136) ;
- générer un signal de mesure en corrélation avec le signal réfléchi utilisant chaque dispositif d'antenne (132, 134, 136) ; et
- combiner les signaux de mesure des dispositifs d'antenne (132, 134, 136) pour former un signal de mesure commun utilisant l'unité de contrôle (101).

13. Élément de programme, qui, lorsqu'il est exécuté sur une unité de contrôle (101) d'un appareil de mesure de niveau de remplissage (100), instruit l'appareil de mesure de niveau de remplissage à exécuter les étapes de la méthode selon la revendication 12.

14. Support lisible par ordinateur, sur lequel un élément de programme selon la revendication 13 est enregistré.
